# EUROPEAN PATENT SPECIFICATION

(11) **EP 1 653 798 B1**
(45) Date of publication and mention of the grant of the patent: **24.05.2017**
(21) Application number: 04777510.1
(22) Date of filing: 03.07.2004
(51) Int. Cl.: A01K 5/02, A01K 7/06, A01K 39/02

(54) **LATERALLY EJECTING FLUID FLOW CONTROL SYSTEM AND METHOD**
STROMREGELSYSTEM UND -VERFAHREN MIT LATERALEM AUSSTOSS
PROCEDE ET SYSTEME DE REGULATION DE L'ECOULEMENT D'UN FLUIDE PAR EJECTION LATERALE

(30) Priority: 05.07.2003 US 613840; 02.02.2004 US 540969 P
(43) Date of publication of application: 10.05.2006
(73) Proprietor: Welbourne Innovations, Inc., Pittsfield, IL 62363 (US)
(72) Inventor: Welbourne, Stephen B., Pittsfield, IL 62363 (US)
(74) Representative: HGF Limited
(86) International application number: PCT/US2004/021438
(87) International publication number: WO 2005/007557

(56) References cited:
- US-A- 2 790 417
- US-A- 3 868 926
- US-A- 3 941 094
- US-A- 3 941 094
- US-A- 4 258 666
- US-A- 4 307 682
- US-A- 4 539 938
- US-A- 4 779 571
- US-A- 5 070 817

## Description

### TECHNICAL FIELD

The disclosed invention relates to systems and methods for controlling fluid flow, and more particularly to a system comprising means for accepting fluid from a source supply, then ejecting said fluid along a non-radial laterally oriented locus substantially without any upward or downward orientation such that said fluid enters a cup with a mixing effect, but with only minimal splashing out thereof. Preferably a restriction element frame substantially bisects the cup as viewed from above and serves to control access to flow ejection control rod means which project in a plane defined thereby, and an automatic fluid ejection limiting float element control further distinguish the disclosed system. The disclosed system finds application in a methodology for the liquid feeding of animals, such as piglets.

### BACKGROUND

Particularly in the last decade, supplemental feeding of piglets with a liquid feed has become increasingly popular as a supplement to, or even as a replacement to sow feeding. Supplemental feeding of piglets can be practiced in addition to sow feeding by isolating a liquid feeder away from the sow, and it has been found that with the aide of a liquid feeder piglets can be weaned as soon as two days after birth. Supplemental feeding has additionally proven to provide many other benefits such as production of stronger, healthier piglets of increased early weight, along with a reduced death rate. Such benefits serve to produce more pounds of pork per sow.

There are presently cup-based liquid feeders available in the marketplace, use of which have demonstrated proven utility. Most such cup-based liquid feeders incorporate what is termed an "Edstrom" liquid feeder system. While performing the basic function required thereof, Edstrom liquid feeders demonstrate inefficiencies which innovation in system design could eliminate. Said inefficiencies include:
1. When liquid feed delivery lines are under pressure, liquid feed (eg. milk), can spray upward and not become contained in an associated cup. It even occurs that liquid feed is sprayed into the face of a piglet when the cup is relatively empty, and this "spray" action can:
   waste liquid feed; and
   even scare young piglets away from the liquid feeder system,
   thus lowering the pressure at which a system operates would enable better results being achieved with only minimal splashing of fluid out thereof;
2. As piglets grow older they often become more active and some tend to "playfully" over-activate a "spray" causing liquid feeder system to the point that liquid feed is wastefully ejected beyond the cup, or fills and then wastefully overflow-spills from the cup,
   thus means limit access to the "spray" causing system means and prevent over activation thereof would enable achieving better results;
3. When liquid feed sits in a cup solids therein separate out and accumulate at the bottom thereof, thereby often becoming waste,
   therefore a liquid injection means and technique for keeping solids from separating out would enable achieving better results; and
4. If liquid feed lines lose pressure, liquid feed in a cup can flow back thereinto and contaminate source liquid feed,
   thus including means to prevent backflow into the source would enable achieving better results.

The invention disclosed herein addresses the foregoing points and provides system and method improvements in the identified areas.

With the disclosed invention in mind, Patent Searching was conducted. Perhaps the most relevant is Patent No. 5,456,210 to Miller which describes a watering system for poultry and the like. The system includes a deflector bell which guides water jets downward into a cup. A perceived problem with this system is that if water is ejected at high pressure it can bounce from the bottom of the cup and splash vertically out of the cup. If used to feed piglets, they can be startled by either direct vertical ejection or such reflected vertical ejection. In contrast, it is noted that a substantially lateral fluid ejection would provide utility. Further, it is noted that the 210 system is designed for use by poultry, which tend not to effectively mix liquid feed as they feed. Piglets, on the other hand, feed by forcing their snouts into a cup, and by said action tend top naturally keep solids in liquid in suspension.

Another Patent, No. 4,779,571 to Row describes a system which allows watering poultry which includes a cup with a raised central plateau portion that defines a cup supply hole fed from a connecting passage. A pecking tip is present, motion of which allows water passage past said cup supply hole.

Another Patent, No. 5,070,817 to Momont describes a system with a back flow preventing means. Patent 4,402,343 to Thompson et al. also describes a system with back flow preventing means therewithin.

Patent No. 4,538,791 to Wostal describes a valve mechanism for a livestock watering bowl. The valve is operated by a plunger motion.

Additional Patents which describe systems which include the presence of back-flow restricting means are:
Patent No. 4,199,000 to Edstrom Sr. et al.
Patent No. 4,282,831 to Nilsen;
Patent No. 4,187,804 to von Taschitzki;
Patent No. 4,138,967 to Tamborrino;
Patent No. 4,047,503 to Wilmont;
Patent No. 3,868,926 to Olde;
Patent No. 3,527,193 to Smith; and
Patent No. 3,505,978 to Nilsen.

As regards systems which can be activated by mechanical action to cause liquid to flow therefrom, the most relevant Patents are:
Patent No. 4,089,350 to Gustin;
Patent No. 5,003,927 to Thompson; and
Patent No. 6,003,468 to Edstrom Sr. et al.
Patent No. 3,941,094 to Nilsen Jr.

Additional Patents which describe functionally relevant systems are:
Patent No. 5,510,177 to Edstrom Sr. et al.
Patent No. 5,065,700 to Cross;
Patent No. 4,416,221 to Novey;
Patent No. 4,370,948 to Atkins;
Patent No. 4,819,585 to Dolan et al.
Patent No. 4,320,891 to Cairns.
Patent No. 3,550,560 to Edstrom.

Importantly, it is particularly pointed out that no identified Patent describes a system for providing fluid to a cup, which as positioned/viewed in side elevation has substantially vertically projecting side(s) and a substantially closed bottom through which projects a means for accepting fluid, which system further comprises means for ejecting fluid entered thereinto in an essentially lateral, off radius oriented locus, such that said fluid enters into said cup in a "swirling" manner conducive to keeping feed mixed into liquid, and further has a cup bisecting restriction element frame for controlling animal access. The presently disclosed invention system teaches such a fluid flow control system that also comprises means for preventing back-flow of fluid entered thereinto, back into a source of said fluid and which provides float means to control effectiveness of operation.

US 4307682 discloses a watering cup for watering chickens having a first contact actuated valve for admitting water which first valve bears against a second interior valve and holds the second valve open.

US 3941094 discloses an actuator-float for animal operation and automatically lifting and thereby closing the valve of a waterer cup, or the like, when filled to a predetermined level, and particularly adapted to animal waterer systems wherein water pressure is relied upon for maintaining the normally closed condition of said valves.

### DISCLOSURE OF THE INVENTION

The invention provides an animal feed system in which fluid is provided to a cup (C), said cup (C), as viewed in side elevation, having an open top, substantially vertically projecting sides and means for accepting fluid projecting through the bottom of said cup, said system including means for ejecting said fluid into said cup along a substantially lateral direction; wherein the means for accepting fluid is incorporated into a nipple housing (NH) which further comprises a rod means (R) situated therewithin, said rod means being accessible from atop the cup and functionally incorporated with said means for accepting fluid such that movement of said rod means out of a nominal vertical orientation causes said means for accepting fluid to allow fluid to enter into said cup via said means for ejecting said fluid; characterised in that a float (FLT) is present inside the nipple housing (NH) which serves to automatically limit movement of the rod means (R), and hence the effecting of fluid flow, when ejected fluid level rises in said cup (C) and inside said nipple housing (NH); wherein the float is in an annular space between said nipple housing and said rod means therewithin, and the annular space is smaller at an upper location than a lower position.

The cup, as viewed in side elevation, is open at the top thereof, has substantially vertically projecting side(s), and a bottom which is substantially closed except for an opening for receiving said nipple housing. Said nipple housing is preferably essentially tubular in shape and vertically projects through the bottom of said cup, in which it is secured.

The nipple housing further comprises at least first and second diameter reducing restrictions therewithin with the first thereof being positioned above the second thereof. Below each of said first and second diameter reducing restrictions there is at least one seal means, (eg. a washer). Said nipple housing further comprises at least one laterally facing hole through the essentially vertical projection thereof, at a vertical location below the vertical level of the top of said cup and above the vertical level of the bottom of said cup.

The means for accepting fluid is present in said nipple housing and comprises a hole, which hole is functionally sealed with a pressure operated back-flow preventing plug means until source fluid, provided externally, presents sufficient pressure on said pressure operated back-flow preventing plug means to effect fluid-forward entry through said hole. (It is noted that while some piglet feeder systems operate based on 2.07-2.72 bar (30-40 psi), the disclosed piglet feeder system can operate at 0.69-1.38bar (10-20 psi). ). The rod means is substantially of one diameter over the majority of its length, but has a substantially abrupt larger diameter near its lower aspect, and said substantially abrupt larger diameter portion has upper and lower surfaces.

Said rod means is positioned in said system for providing fluid to a cup such that it projects substantially vertically, upwardly out of said nipple housing through the seal means associated with the first restriction, simultaneous with the upper surface of said rod means substantially abrupt larger diameter being in contact with the seal means associated with the second restriction.

In use source fluid is provided in contact with the back-flow preventing plug means at a sufficient pressure, (eg. 0.69-1.38 bar (10-20 psi)), to cause said back-flow preventing plug means to allow said source fluid entry into said nipple housing, wherein it contacts the lower surface of said substantially abrupt larger diameter of the lower aspect of said rod means. Further when said rod means is, (by application of physical force to its upper end which projects through the seal associated with the first restriction in said nipple housing and out of said nipple housing), caused to project other than substantially vertically, said seal means associated with the second restriction is caused to receive and allow fluid to pass vertically therethrough and thereafter be ejected from said at least one hole through the vertical projection of said nipple housing, said fluid being ejected substantially laterally into said cup substantially without a upward or downward component and preferably along a non-radial locus which serves to cause fluid in the cup to undergo a swirling motion which keeps solids in solution. It is noted that the seal means associated with the first restriction continues to prevent substantially all fluid from flowing essentially vertically there-past during said usage.

Another recitation of a disclosed invention system for providing fluid to a cup, provides that said cup, as presented in side elevation, has a bottom, a substantially open top and substantially vertically projecting sides. Said system further comprises means for accepting fluid projecting through the bottom of said cup, and means for ejecting said fluid into said cup along a substantially horizontally oriented locus, rather than along a substantially upward or downward oriented locus, said system having no elements present therewithin to influence fluid ejection into said cup along a locus with a generally upward or downward component. Said system is distinguished in that:
there is a restriction element frame present at least partially within said cup in a plane which substantially bisects said cup; and
the means for ejecting said fluid into said cup ejects fluid substantially laterally along a locus which is non-radially so that it approaches at an angle to a substantially vertically projecting cup side.

It is also noted that the cup can have a substantially flat lower inner surface, which the substantially vertically projecting sides meet at a substantially ninety degree angle, or said inner bottom surface can be concave upward.

A presently disclosed system for providing fluid to a cup, can be more concisely described, as viewed in side elevation, as having an open top, substantially vertically projecting sides and means for accepting fluid projecting through the bottom of said cup, said system including means for ejecting said fluid into said cup along a substantially laterally oriented locus. A preferred arrangement provides that the means for ejecting said fluid into said cup ejects fluid thereinto substantially horizontally. Further, a preferred arrangement provides that the means for accepting fluid accepts fluid entered thereinto along a substantially vertically oriented locus.

A more detailed description provides that the means for accepting fluid is incorporated into a nipple housing which further comprises a rod means situated therewithin, said rod means being accessible from atop the cup and functionally incorporated with said means for accepting fluid such that movement of said rod means causes said means for accepting fluid to allow fluid to enter into said cup via said means for ejecting said fluid, again along a substantially laterally oriented locus.

Further, it is preferred that said means for accepting fluid comprises a hole, said hole being functionally sealed with a back-flow preventing plug means until source fluid presents sufficient pressure to move said back-flow preventing plug means and allow said fluid entry through said hole.

Where the system for providing fluid to a cup is constructed such that said means for accepting fluid is contained within a nipple housing, it should be clear that it is the later which directly projects substantially vertically into the cup through the otherwise closed bottom thereof. The nipple housing is then positioned such that source fluid which flows past said back-flow preventing plug means, enters thereinto. Again, the nipple housing further comprises therewithin a rod means which projects from said nipple housing such that said projected rod means is made accessible at the top of said cup. Said rod means is functionally incorporated with said means for accepting fluid such that movement of said rod means causes said means for accepting fluid to allow fluid to flow into said nipple housing and enter into said cup along a substantially laterally oriented locus.

A preferred system provides that said rod means projects from said nipple housing through a first seal means which prevents substantially all fluid from passing vertically therethrough. A lower aspect of said rod means is substantially abruptly broadened in diameter, and there is a second seal means present atop said broadened lower aspect, said second seal being in contact, at an upper aspect thereof, with retaining means in said nipple housing such that when said rod means is positioned to project substantially vertically, fluid present in said nipple housing therebelow can not flow upward, but such that when said rod means is caused to be moved so as to project other than substantially vertically, a flow path is opened past said broadened lower aspect of said rod means, and past said second seal means. (Note, minimal fluid flow upward might occur past the seals in a disclosed invention system, but such is unintentional and minimal compared to that which intentionally is caused to flow upward in prior art systems).

Again, a disclosed invention system for providing fluid feed to a cup, basically provides that said cup, as viewed in side elevation, again has an open top, substantially vertically projecting side(s), and further comprises an opening in the bottom thereof through which means for accepting fluid project. Said disclosed system further comprises means for ejecting said fluid into said cup along a substantially laterally oriented locus, as well as a rod means situated substantially within said cup. Said rod means is functionally incorporated into said means for accepting fluid such that movement of said rod means causes said means for accepting fluid to allow fluid to enter into said cup along a substantially laterally oriented locus.

It is to be appreciated that a presently disclosed system for providing fluid feed to a cup, which system comprises:
means for accepting fluid which project through a lower aspect of said cup;
means for ejecting said fluid into said cup when caused to do so by movement of a rod means which is situated substantially within said cup and is functionally incorporated into said means for accepting fluid such that movement of said rod means causes said means for accepting fluid to allow fluid to enter into said cup, the amount of fluid flow caused being generally greater for a greater amount rod means movement;
can be characterized in that means for limiting the amount of motion allowable to said rod means is removably affixed thereto.

The disclosed invention can also comprise a system for providing fluid to a cup, said cup, as presented in side elevation, having a bottom, a substantially open top and substantially vertically projecting sides, said system further comprising means for accepting fluid projecting through the bottom of said cup. In said means for accepting fluid is incorporated in a nipple housing which further comprises a rod means situated therewithin, said rod means being accessible from atop said cup and functionally incorporated into said means for accepting fluid such that movement of said rod means causes said means for accepting fluid to allow fluid to enter into said cup via said means for ejecting said fluid into said cup. Importantly, an annular space between said nipple housing and said rod means therewithin is smaller at its top than it is therebeneath, and said annular space has a float therewithin such that if fluid accumulates withing said cup and annular space, said float rises in said annular space and serve to automatically restrict possible rod means motion. When fluid level lowers, the float lowers an increased rod means motion is again possible.

Finally, it should be appreciated that the disclosed invention teaches a system providing liquid feed to piglets addresses and simultaneously overcomes a plurality of selections from the group:
prevents liquid feed, (eg. milk), from being sprayed upward and not becoming contained in an associated cup, or being sprayed into the face of a piglet when the cup is relatively empty, which action can waste liquid feed and even scare young piglets away from the liquid feeder system;
provides means to prevent piglets from "playfully" over-activating a "spray" causing liquid feeder system to the point that liquid feed is wastefully ejected beyond the cup, or fills and then wastefully overflow-spills from the cup;
provides means for ejecting liquid feed into a cup using a liquid injection means and technique for keeping solids from separating out;
provides means for preventing liquid feed in a cup from flowing back into the source thereof and contaminate source liquid feed if pressure is source lost, which pressure is maintained at below 2.07 bar (30 psi) and is preferably between 0.69-1.38 bar (10-20 psi); and
provides means for utilizing higher than 0.69-1.38 bar (10-20 psi) without overfilling a cup.

The disclosed invention will be better understood by reference to the Detailed Description Section of this Specification, with reference to the Drawings.

It is a purpose and/or objective of the disclosed invention to teach a fluid feeder system comprising at least one selection from the group:
means for accepting fluid from a source supply and ejecting said fluid along a substantially laterally oriented non-radial locus such that said fluid enters a cup in a manner which causes said fluid to "swirl" with the result being that solids are kept in solution; and
a restriction element frame present at least partially within said cup in a plane which substantially bisects said cup which serves to limit access to said cup and rod means, said rod means being substantially present within the plane of said restriction element frame.

Stated alternatively, it is a purpose of the disclosed invention to teach a system for accepting fluid from a source supply, then ejecting said fluid along a substantially non-radial laterally oriented locus substantially without intended upward or downward orientation such that said fluid enters a cup with a mixing effect, but with only minimal splashing out thereof; said system also comprising a restriction element frame which substantially bisects the cup and serves to control access thereto, a rod means for controlling fluid ejection being substantially within an access limiting plane formed by said restriction element frame; said system finding application in a methodology for the liquid feeding of animals such as piglets.

It is another purpose and/or objective of the disclosed invention to, in a fluid feeder system, teach means for controlling the amount of fluid flow into a cup by motion of a rod means, and further to control the amount of motion allowed to said rod means by removably affixing a means for limiting rod means motion thereto.

It is yet another purpose and/or objective yet of the disclosed invention to teach a system in which fluid is entered via means for accepting fluid projecting through the bottom of said cup at any pressure between 0.34 and 3.45 bar (between 5 and 50 psi) , but preferably between a non-limiting 0.69-1.38 bar (10-20 psi). It is another purpose and/or objective yet of the disclosed invention to teach use of a cup with a flat bottom.

It is another purpose and/or objective of the disclosed invention to teach a system which, while providing liquid feed to piglets addresses and simultaneously overcomes a plurality of selections from the group:
prevents liquid feed, (eg. milk), from being sprayed upward and not becoming contained in an associated cup, or being sprayed into the face of a piglet when the cup is relatively empty, which action can waste liquid feed and even scare young piglets away from the liquid feeder system;
provides means to prevent piglets from "playfully" over-activating a "spray" causing liquid feeder system to the point that liquid feed is wastefully ejected beyond the cup, or fills and then wastefully overflow-spills from the cup;
provides means for ejecting liquid feed into a cup using a liquid injection means and technique for keeping solids from separating out;
provides means for preventing liquid feed in a cup from flowing back into the source thereof and contaminate source liquid feed if pressure is source lost, which pressure is maintained at below 30 psi and is preferably between 0.69-1.38 bar (10-20 psi); and
provides means for utilizing higher than 0.69-1.38 bar (10-20 psi) without overfilling a cup.

It is yet another purpose and/or objective of the disclosed invention to teach a system which system includes a reduced annular space between a nipple housing and a rod means located therewithin over a vertical distance of said annular space between a lower extent thereof and an upper extent thereof, there being a float present in said annular space which automatically adjusts rod means motion as a function of fluid level in said annular space.

Additional purposes and/or objectives will become apparent upon a reading of the Specification and Claims.

### BRIEF DESCRIPTION OF THE DRAWINGS

Fig. 1a shows a side-elevational-cross-section view of a typical prior art fluid feeder system in which vertically oriented fluid flow is blocked unless the Rod means is moved as shown in Fig. 1b to form a flow path (FP).
Fig. 1b shows the Rod means (R) of Fig. 1a moved to provide a fluid flow path (FP).
Fig. 2, 3a 3b, 3c and 3d show side-elevational-cross-section views of disclosed systems.
Figs. 3e, 3f and 3g show a "Float (FLT) which automatically restricts the Rod Means (R) motion which fluid causes it to rise in Element (E7).
Figs. 4a and 4b show cross-sectionals taken at a---a in Fig. 3d, and indicate fluid ejection along a non-radial fluid rotation-causing locus, and a radial locus respectively.
Fig. 5a shows a top perspective view of a disclosed invention system, along with indication of a piglet that can operate the Rod means (R) where it extends from the cup (C) to cause fluid feed to eject from (FOUT) holes.
Figs 5b and 5c show a cup with the access restricting element (RE) being an extension of the element (E1) shown in Fig. 3d, as applied in use.

### DETAILED DESCRIPTION

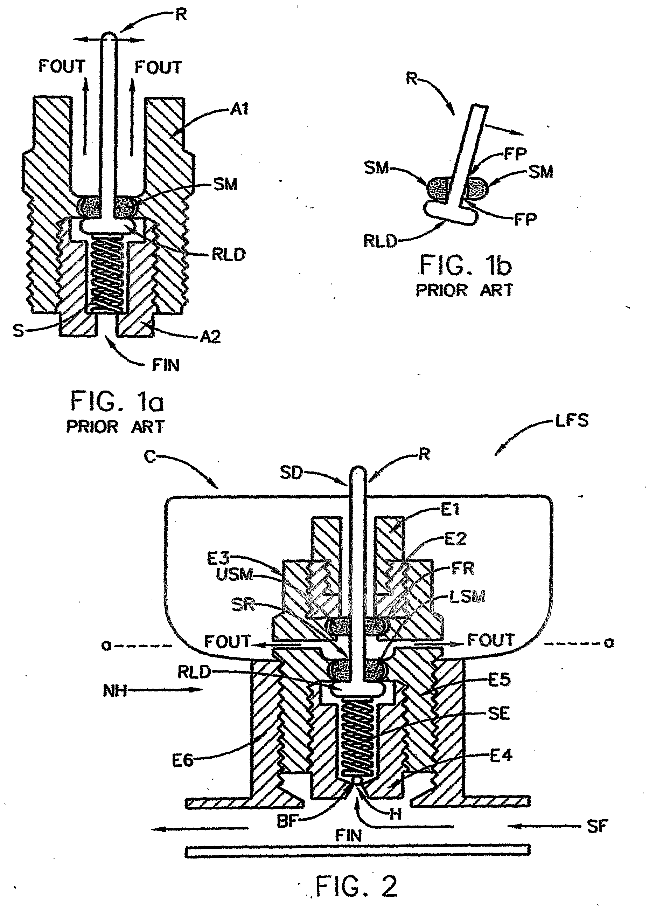

Turning now to Fig. 1a, there is shown a typical Prior Art Fluid Feeder System. Shown are basic structural elements (A1) and (A2), and a Rod means (R) with a Substantially Abrupt Larger Diameter near its lower aspect (RLD). Also shown are a Seal Means (SM), and a Spring (S) (shown as a coil in Fig. 1a, but it is also known to use a functionally similar pliable soft mass of material), to maintain fluid sealing contact between the Substantially Abrupt Larger Diameter portion of the Rod means (R) and the Seal Means (SM). In use, when the Rod means (R) is positioned to project substantially vertically as shown, no fluid can pass from the Input (FIN) as Output (FOUT). However, when the Rod means (R) is caused to move off the shown vertical orientation, (eg. see arrows pointing to the Right or Left in Fig. 1a), as shown in Fig. 1b, the Seal Means (SM) allows fluid to pass through the Flow Path (FP), (see Fig. 1b), from input (FIN), through said Seal Means (SM), and eject substantially laterally as Fluid Out (FOUT) as identified in Fig. 1a. (It is noted at this point that, as shown in Fig 2, a primary distinction of the disclosed invention, in any of its embodiments, over prior art systems is that the output fluid is not intentionally caused to eject vertically upward or downward, but rather ejects substantially laterally, (see indicated (FOUT) in Fig. 2), through at least one (FOUT) hole. It is also noted that the holes through which flows (FOUT) can be oriented so as to direct fluid straight toward a substantially vertical cup wall, or so as to eject fluid laterally along a locus which will cause a swirling of fluid in the cup. In either case the ejection locus will be, as viewed in side elevation, substantially lateral and is not intentionally directed upward or downward. This is considered to be an important utility providing aspect of the disclosed invention.

Turning now to Fig. 2, there is shown a presently disclosed system. Demonstrated are a Cup (C) and basic Nipple Housing (NH) structural elements (E1) (E2) (E3) (E4) (E5) and (E6). Note that structural element (E1) screws into structural element (E2), which screws into structural element (E3), and that structural element (E4) screws into structural element (E5), which screws into structural element (E6), with structural element (E6) being functionally connected to the means for providing Source Fluid (SF), which it is noted is typically at 0.69-1.38 bar (10-20 psi) in the presently disclosed system, as compared to 2.07-2.26 bar (30-40 psi) in known systems for performing similar functions. Note that Structural Elements (E3) and (E5) are typically the upper and lower portions of a single continuous element. It should be appreciated that an immediate distinction of the Fig. 2 system over some Prior Art is the presence of the Back-Flow Preventing Plug (BF) atop a Hole (H) through structural element (E4). Said Back-Flow Preventing Plug (BF) serves to prevent Source Fluid entered therepast back into the Source Fluid (SF), thereby preventing contamination thereof.

It is of primary importance to note that the Fig. 2 embodiment (LFS) includes a Rod means (R) and a Seal means (LSM). The Rod mean (R) is shown to be of substantially one relatively Small Diameter (SD) over the majority of its length, (see Rod means (R) inside the Cup (C)), but has a substantially abrupt larger diameter (RLD) near its lower aspect, said substantially abrupt larger diameter portion having Upper and Lower Surfaces. Said Upper Surface is shown to contact the Lower Seal Means (LSM), and a Spring Element (SE) is shown as serving to maintain said contact. (It is also noted that the Spring Element (SE) can be utilized to maintain pressure on the Back-Flow Preventing Plug (BF)). Further note that said Upper Surface of the Lower Seal Means (LSM) is shown to be secured against a Second Diameter Restricting Means (SR) which is a part of Structural Element (E4), as combined with Structural Element (E5). With the Rod means (R) In the position shown, Source Fluid (SF) which passes through the Back-Flow Preventing Plug (BF), because it is maintained at a pressure sufficient to push the Back-Flow Preventing Plug (BF) upward, (as shown in Fig. 2), and allow Forward-Flow of Source Fluid, can not proceed past said Lower Seal Means (LSM). However, much as demonstrated by Fig. 1b, if the Rod means (R) in Fig. 2 is forced to assume other than a nominal vertical orientation, a Flow Path opens and allows Source Fluid to get past said Lower Seal Means (LSM). Again, refer to Fig. 1b to appreciate this point. The Fig. 2 system however, does not provide that such Source Fluid which proceeds past said Lower Seal Means (LSM) exit in a substantially vertically oriented direction as is the case in a Fig. 1a system, but rather, the Upper Seal Means (USM) in a Fig. 2 system prevents substantially all said Source Fluid from doing so. Note that the Rod means (R) securely passes through said Upper Seal Means (USM), and that said Upper Seal Means (USM) is maintained in a First Diameter Restricting Means (FR) formed by Structural Elements (E2) and (E3). Fig. 2 shows that the Source Fluid exits other than along a substantially horizontally oriented locus identified as (FOUT), and in fact Source Fluid (SF) which entered along a substantially vertically oriented locus (FIN), exits substantially laterally into said Cup (C) as Fluid Out (FOUT). It should be appreciated that this minimizes the splashing of fluid out of the cup.

At this point it is beneficial to note that during use the Fig. 2 system (LFS), prevents fluid feed from being sprayed upward into the air rather into a cup. This can include being sprayed into the face of a piglet that operates the Rod means (R), when the cup is relatively empty, which "spray" action wastes fluid feed, and even scares young piglets that are not used to the cup feeder away from the fluid feeder system. Further, as piglets grow older and become more active and "playfull" they will not be tempted by the possibility of causing an upward "fluid spray", and will therefore be less likely to over activate a Fig. 2 fluid feeder system (LFS), thereby wasting fluid feed. It is also noted that in summer heat pigs learn to cool themselves by causing a spray of liquid feed into the air. As well, the Fig. 2 arrangement serves to prevent fluid feed from being wastefully ejected beyond the cup. Further, the presence of the Back-Flow Preventing Plug (BF) prevents fluid feed, (for instance, after sitting in a cup long enough so that solids therein separate out and accumulate at the bottom thereof, thereby often becoming waste), from flowing back into the Source Fluid (SF) if fluid feed lines lose pressure. This is desirable as it prevents possible contamination of the source fluid.

It is also noted that flow restriction means can be added to limit possible rod means movement and thereby limit liquid feed flow when piglets operate a presently disclosed system, (ie. piglets will cease trying if they have to work too hard to operate the liquid feed flow).

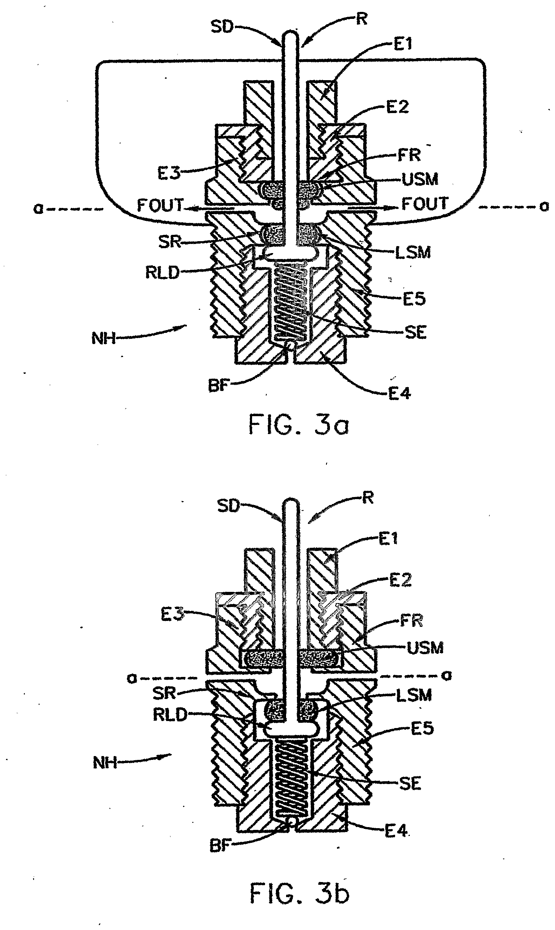

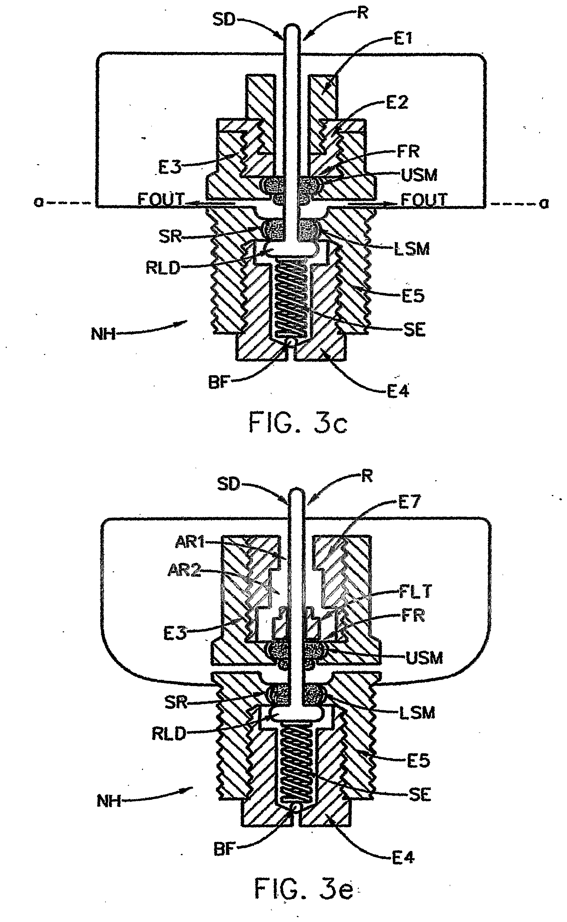

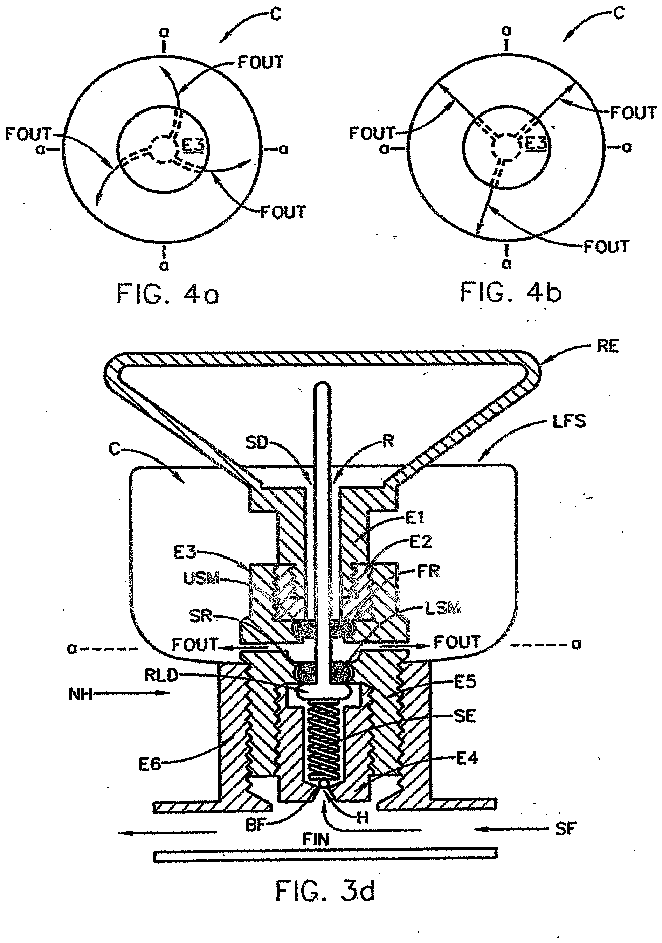

Figs. 3a, 3b, 3c and 4 show variations on the Fig. 2 (LFS) system. Note that the major differences relate to the Upper (USM) and Lower (LSM) Seal Means arrangements. Fig. 3a, for instance demonstrates use of two Seals to form the Upper Seal Means (USM). However, it is disclosed that any number of Seals can be used. The multiple seal arrangement better prevents Fluid from flowing substantially vertically therepast and undesirably eject much as does fluid in the Fig. 1b Prior Art system. Fig. 3b shows another modification of the Upper Seal Means (USM). Note that the Fig. 3a Upper Seal Means (USM) is contained in a First Diameter Restricting Means (FR) which is formed from structural elements (E1) (E2) and (E3) which are modified in design from the analogically similar Structural Elements in Figs. 2 and 3a. Note that generally the same identifiers are used to identify elements in Figs. 2, 3a - 3d and detailed description of said Figs. 3a and 3d will therefore not be presented. The reader should re-read the description of Fig. 2 with comparative reference to Figs. 3a - 3d to appreciate what is shown therein. In that light, it must be appreciated that it is not the specific design of Structural Elements which is the focus of the disclosed invention, but rather the Ejecting Fluid Low Path, (see (FOUT)) in Fig. 2 compared to that shown in the Prior Art Fig. 1a), effected by the functional combination of Structural Elements, in combination with the presence of the Back-Flow Preventing Plug (BF) in the effective Means for Accepting Fluid.

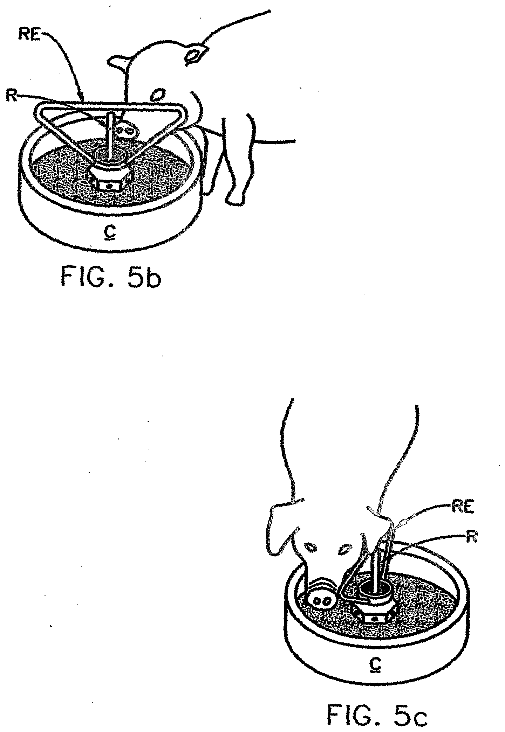

It is specifically noted that Fig. 3c shows a flat bottom Cup (C), which can be useful in embodiments as shown in Figs. 5b and 5c, (see discussion thereof below), and indicates that the upper surface of the bottom of the Cup (C) can be located level with the Fluid output (FOUT). This arrangement directs Fluid (FOUT) flow along a locus which keeps solids in the Cup (C) in solution.

Fig. 3d requires additional description in that structural element (E1) is shown to have a Restriction Extension (RE). Figs. 5b and 5c show a cup (C) with the access Restricting Extension (RE) of element (E1) shown in Fig. 3d applied in use. Note that piglets can access the Rod means (R), continuous operation thereof is discouraged by the presence of the Restriction Extension (RE). The Restriction Extension (RE) is best described as being a Restriction Element (RE) frame substantially present within a plane which bisects the cup (C) and contains said Rod (R). Though shown as a basically triangular shape as viewed in frontal elevation, (see Fig. 3d), and thin as viewed in side elevation, (see indication thereof in Fig. 5c), any functional shaped Restriction Element (RE) frame can be utilized, (eg. rectangular, square, diamond, oval, round etc.) and is to be considered within the scope of the Claims. Further, while shown as an extension of Structural Element (E1), it is to be understood that any functional mounting of Restriction Extension (RE) frame is to be considered equivalent and within the scope of the Claims if a functional configuration as shown in Figs 5b and 5c is achieved wherein an animal can access the Rod Means (R) from a side of the Restriction element (RE) and access fluid in the Cup (C) from one side of the Restriction Extension (RE) frame. (Note that a second animal, (not shown), could simultaneously access the Cup (C) from the side opposite to the side of the Restriction Extension (RE) frame on which is shown the piglet, but that many animals could not simultaneously have access. The presence of the Restriction Extension (RE) frame prevents overworking of the Rod Means (R) in use both by making its access more difficult and by restricting access thereto by many animals simultaneously).

While, as stated, the Structural Elements (E1), (E2), (E3), (E4) and (E5) are for the most part not critical to the invention, it must be clarified that Structural Element (E1) does serve a new and novel function, in addition to providing a base for the Restriction Element (RE) frame. Said Structural Element (E1) can be put into place for the purpose of restricting the allowed motion of the Rod means (R), so as to limit motion of the Rod Means (R) and resulting fluid flow. Where the internal diameter of element (E1) is of a size to provide snug fit around Rod (R), for instance, the fluid flow control operation of the disclosed invention can be prevented entirely. That is, the more off-substantially vertical the Rod means (R) is pushed, generally the more fluid can flow by the substantially abrupt larger diameter (RLD) portion of Rod means (R), and through the Lower Seal Means (LSM). Reference to Fig. 1b gives insight to why this is. The small internal diameter of the Structural Element (E1), limits the lateral motion possible by Rod means (R), thus limits the amount of fluid which can flow through said Lower Seal Means (LSM). It is noted that existing means for performing a similar function in other animal feeder systems are closed topped such that a rod therein can not extend out the top thereof. Said existing means for performing a similar function are bulkier and heavier and more difficult to carry in one's pocket, as is common practice. In use practitioner's affix and remove such (E1) flow restricting means as their experience and judgement deem appropriate.

Note that where structural Element (E1) serves primarily as a base for the Restriction Element (RE) frame as in Fig. 3d, the internal diameter of the hole through which Rod Means (R) projects can be of any desired functional dimension. In fact two Structural Elements (E1) can actually be provided, one as shown in Figs 3a and 3b with a small inner diameter hole therethrough for use in limiting Rod Means (R) motion, and one as shown in Fig. 3d with a larger hole therethrough for use in providing a mounting base for the Restriction Element (RE) frame during feeding periods when Rod Means (R) motion is not to be prevented. Also, note that Structural Element (E1) can be extended in width where it sits atop structural Element (E3).

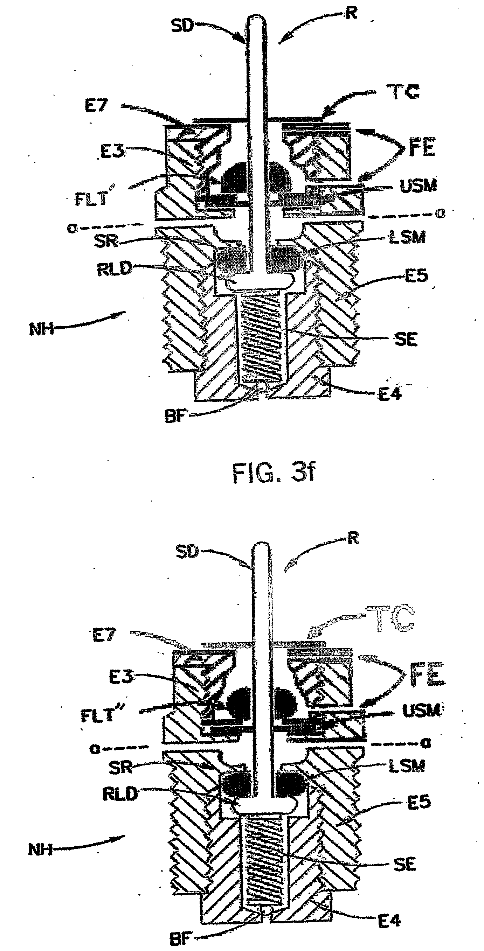

Figs. 3e, 3f and 3g show nonlimiting examples of "Floats" (FLT) (FLT') (FLT") which are made from material with is buoyant in a present Fluid, and which automatically restrict the Rod Means (R) motion when said fluid causes it to rise in Element (E7). Any functional shape Float and Annular space combination is within the scope of the disclosed invention. When the Float (FLT) is unelevated it has negligible effect on the Rod Means (R) motion, but as it rises upward in Element (E7) its size/shape causes it to restrict possible Rod Means (R) motion. It is noted that while Fluid will enter the central region of Element (E7) mostly from the top in Fig. 3e, Fig. 3f shows Top Cover (TC) in place to prevent debris entry thereinto, and further includes Fluid Entry/Exit (FE) means. Fig. 3e shows the disclosed invention can comprise a stepped inner diameter nipple housing which comprises the rod means situated therewithin. The Annular Space in Element (E7) is shown to be smaller at the upper location (AR1) than it is at a lower position (AR2), such that float (FLT) rising will serve to automatically restrict possible rod means motion. Figs. 3f and 3e demonstrate alternative Float (FLT') (FLT") and Annular Space in Element (E7) central region geometries. Note that when fluid level lowers, a present Float lowers and increased rod means motion again becomes possible.

Figs. 4a and 4b show cross-sectionals taken at a---a in Figs. 2, 3a, 3b, 3c and 3d and indicate fluid ejection (FOUT) along three non-radial, fluid rotation-causing loci, and along three radial loci, respectively. That is to say the means for ejecting said fluid into said cup ejects fluid (FOUT) substantially laterally along a locus selected from the group consisting of:
radially so as to directly approach a substantially vertically projecting cup side; and
non-radially so that it approaches at an angle to a substantially vertically projecting cup side.

Again, for emphasis, the ejected fluid (FOUT) is shown to follow a non-radial locus in Fig. 4a so that it approaches at an angle to a substantially vertically projecting cup (C) side. This is in contrast to the radial locus in Fig. 4b which causes fluid to so as to directly approach a substantially vertically projecting cup (C) side. While the Fig. 4b embodiment is unknown in the art, the Fig. 4a embodiment is believed to be very new, novel and non-obvious and is preferred as being useful in that it imparts a rotation motion to fluid in the cup which helps keep solids from settling out thereof during use.

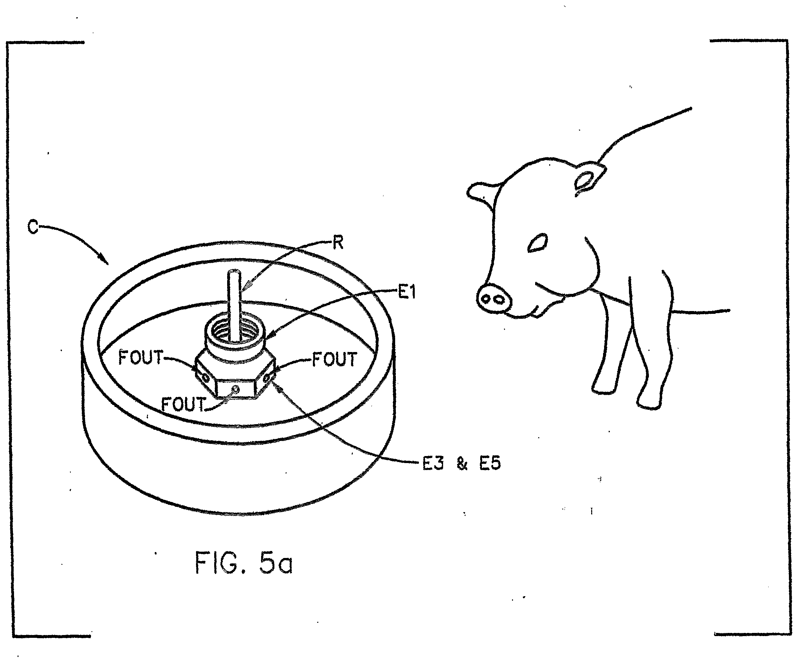

Fig. 5a shows a top perspective view of a disclosed invention system, along with indication of a piglet that can operate the Rod means (R) to cause fluid feed to eject from shown (FOUT) holes. Note that any number of (FOUT) holes can be present, but the preferred design utilizes three (3) as in Figs. 4a and 4b, to six (6) as indicated in Fig. 5a.

Again, it should be appreciated that Structural Elements (E3) and (E5) are typically, though not necessarily, the upper and lower portions of a single continuous element which has (FOUT) holes present in the vertical projection of said nipple housing, (at vertical location(s) below the vertical level of the top of said cup and above the vertical level of the bottom of said cup, in the context of the system shown in Fig. 2.

It is also specifically noted that the terminology "fluid" has been used in this Specification. Typically this should be interpreted to mean conventional "liquid" animal feed, however, the terminology "fluid" is to be understood to include any material which flows sufficiently to be processed by a disclosed invention system, including water.

It is also to be understood that the terminology "substantially tubular" or "essentially tubular" is not to be interpreted to require that an element so described have a circular cross-sectional shape, but rather only that the element so described can perform a transport function of a fluid over some distance, said fluid being substantially confined within said element. In that same light the terminology "side(s)" is used in this Specification to mean that the identified element can have any functional number of sides or can be circular etc.

It is also noted that the language "said system being characterized by having a restriction element frame at least partially within said cup in a plane which substantially bisects said cup, said rod means being projected substantially within the plane of said restriction element frame", and the like is to be interpreted to means that said rod means direction of projection is at an angle of less than about +/-10 degrees with respect to the plane of the restriction element frame.

It is also to be appreciated that the language "a system for providing fluid to a cup, said cup, as presented in side elevation, having a bottom, a substantially open top and substantially vertically projecting sides", does not require that the sides be absolutely vertically projecting at all locations along the length thereof, but rather it is to be considered that some curvature, especially near intersection with the bottom of the cup, can be present.

Further, it is noted that the effect of gravity on the trajectory locus of fluid ejected at 20 psi into the cup (C) is negligible over the cup (C) dimensions, thus fluid ejected substantially laterally is not noticeably deflected downward thereby even if fluid ejection is above the upper surface of the top of the cup. It is also noted that utility is derived from the fact that solids in liquid feed have a tendency to separate out and deposit as a sludge in the bottom of fluid in a cup, and that entering liquid feed laterally into a cup tends to keep said sludge mixed into suspension.

It is specifically stated that Patentability is believed found in the combination of a means for accepting fluid which projects through the bottom of said cup (C) and means for ejecting said fluid into said cup along a non-radial substantially laterally oriented locus. This is believed to be particularly true where:
a "float" is present inside the nipple housing (NH) which serves to automatically limit Rod means (R) motion, and hence the effecting of fluid flow, when ejected fluid level rises in said cup (C) and inside said nipple housing (NH). Further, the "float" and annular space in which it is present can be of any functional shape.

It is again noted that the disclosed invention can operate at any functional pressure, (eg. 5 - 50 PSI,) and be applied to control substantially any fluid.

## Claims

1. An animal feed system in which fluid is provided to a cup (C), said cup (C), as viewed in side elevation, having an open top, substantially vertically projecting sides and means for accepting fluid projecting through the bottom of said cup, said system including means for ejecting said fluid into said cup along a substantially lateral direction; wherein the means for accepting fluid is incorporated into a nipple housing (NH) which further comprises a rod means (R) situated therewithin, said rod means being accessible from atop the cup and functionally incorporated with said means for accepting fluid such that movement of said rod means out of a nominal vertical orientation causes said means for accepting fluid to allow fluid to enter into said cup via said means for ejecting said fluid; **characterised in that** a float (FLT) is present inside the nipple housing (NH) which serves to automatically limit movement of the rod means (R), and hence the effecting of fluid flow, when ejected fluid level rises in said cup (C) and inside said nipple housing (NH); wherein the float is in an annular space between said nipple housing and said rod means therewithin, and the annular space is smaller at an upper location than a lower position.

2. The system of claim 1, wherein the fluid is ejected into the cup in a non-radial direction.

3. The system of claim 1 or claim 2, wherein the means for accepting fluid accepts fluid in a substantially vertical direction.

4. The system of any preceding claim wherein the nipple housing further comprises fluid entry/exit means configured to allow fluid to enter and exit the annular space.

5. The system of any of claims 1 to 4 wherein the rod means is substantially of one diameter over the majority of its length, but has a substantially abrupt larger diameter at a lower portion.

6. The system of any of claims 1 to 4, wherein said rod means (R) projects from said nipple housing (NH) through a first seal means which prevents substantially all fluid from passing vertically therethrough; a lower portion of said rod means (R) being substantially abruptly broadened, and there being a second seal means present atop said broadened lower aspect, such that when said rod means (R) is positioned to project substantially vertically, fluid present in said nipple housing (NH) therebelow can not flow upward, but such that when said rod means (R) is caused to be moved so as to project other than substantially vertically, a flow path is opened past said broadened lower aspect of said rod means (R), and past said second seal means.

7. The system of claim 6, wherein said second seal is in contact, at an upper portion thereof, with retaining means (SR) in said nipple housing (NH).

8. The system of any of claims 1 to 4, wherein said nipple housing (NH) further comprises at least first and second diameter-reducing restrictions therewithin with the first thereof being positioned above the second thereof, below each of said first and second diameter reducing restrictions there being at least one seal means, said nipple housing (NH) further comprising at least one laterally facing hole therethrough which constitutes the means for ejecting fluid and is at a location intermediate the top of said cup (C) and the bottom of said cup (C);
said rod means (R) being substantially of one diameter over the majority of its length, but having a substantially abrupt larger diameter near its lower end, said substantially abrupt larger diameter portion having upper and lower surfaces;
said rod means (R) being positioned such that it projects substantially vertically, upwardly out of said nipple housing through the seal means associated with the first restriction and the upper surface of said substantially abrupt larger diameter is in contact with the seal means associated with the second restriction;
such that in use source fluid may enter said nipple housing (NH), wherein the fluid contacts the lower surface of said substantially abrupt larger diameter of the lower aspect of said rod means (R);
and further such that when said rod means (R) is caused to project other than substantially vertically, and while said seal means associated with the first restriction continues to prevent substantially all fluid from flowing there-past, said seal means associated with the second restriction is caused to receive and allow fluid to pass substantially vertically therethrough and thereafter be ejected from said at least one hole, said fluid being ejected in a substantially laterally oriented direction into said cup (C), there being no elements present therewithin to influence fluid ejection (FOUT) into said cup (C) in in a direction with a generally upward or downward component.

9. The system of claim 6, 7 or 8 wherein the first seal means includes two seals, and optionally wherein at least one of the seal means is a washer.

10. The system of any of claims 1 to 9 which further includes flow restriction means (E1) to limit movement of the rod means and thereby limit liquid flow.

11. The system of claim 10, wherein the flow restriction means is removable.

12. The system of claim 10 or claim 11 which comprises a flow restriction means which prevents rod means movement entirely.

13. The system of any preceding claim which further comprises a restriction element frame (RE) configured to restrict access to the rod means.

14. The system of any preceding claim which further comprises a restriction element frame (RE) configured to allow an animal access to the rod means and to fluid in the cup from one side of the frame but not to allow many animals to have access simultaneously.

15. The system of any preceding claim wherein the means for ejecting fluid comprises from three to six laterally facing holes through which fluid is conveyed from the means for accepting fluid and ejected into the cup.

## Patentansprüche

1. Tierfütterungssystem, bei dem Fluid in einen Napf (C) bereitgestellt wird, wobei der Napf (C) in Seitenansicht eine offene Oberseite, im Wesentlichen vertikal verlaufende Seiten und ein Mittel zum Aufnehmen von Fluid, das durch den Boden des Napfes verläuft, aufweist, wobei das System ein Mittel zum Ausstoßen des Fluids in den Napf entlang einer im Wesentlichen seitlichen Richtung umfasst; wobei das Mittel zum Aufnehmen von Fluid in einem Nippelgehäuse (NH) enthalten ist, das ferner ein darin angeordnetes Stabmittel (R) umfasst, wobei das Stabmittel im Napf von oben aus zugänglich ist und funktionell in das Mittel zum Aufnehmen von Fluid integriert ist, sodass eine Bewegung des Stabmittels aus einer vertikalen Nennausrichtung heraus dazu führt, dass das Mittel zum Aufnehmen von Fluid es ermöglicht, dass Fluid in den Napf über das Mittel zum Ausstoßen des Fluids eintritt; **dadurch gekennzeichnet, dass** ein Schwimmer (FLT) im Inneren des Nippelgehäuses (NH) vorhanden ist, der dazu dient, die Bewegung des Stabmittels (R) und damit das Auslösen von Fluidströmung automatisch zu begrenzen, wenn der Pegel an ausgestoßenem Fluid in dem Napf (C) und im Inneren des Nippelgehäuses (NH) steigt; wobei sich der Schwimmer in einem Ringraum zwischen dem Nippelgehäuse und dem Stabmittel darin befindet und der Ringraum an einer oberen Stelle kleiner ist als in einer unteren Position.

2. System nach Anspruch 1, wobei das Fluid in den Napf in einer nichtradialen Richtung ausgestoßen wird.

3. System nach Anspruch 1 oder Anspruch 2, wobei das Mittel zum Aufnehmen von Fluid Fluid in einer im Wesentlichen vertikalen Richtung aufnimmt.

4. System nach einem vorhergehenden Anspruch, wobei das Nippelgehäuse ferner Eintritts-/Austrittsmittel für Fluid umfasst, die derart ausgestaltet sind, dass sie es ermöglichen, dass Fluid in den Ringraum eintritt und daraus austritt.

5. System nach einem der Ansprüche 1 bis 4, wobei das Stabmittel im Wesentlichen einen Durchmesser über den Großteil seiner Länge aufweist, jedoch einen im Wesentlichen abrupten größeren Durchmesser in einem unteren Abschnitt aufweist.

6. System nach einem der Ansprüche 1 bis 4, wobei das Stabmittel (R) aus dem Nippelgehäuse (NH) durch ein erstes Dichtmittel vorsteht, das verhindert, dass im Wesentlichen das gesamte Fluid vertikal dadurch hindurchtritt; wobei ein unterer Abschnitt des Stabmittels (R) im Wesentlichen abrupt verbreitert ist und ein zweites Dichtmittel auf dem verbreiterten unteren Abschnitt vorhanden ist, sodass, wenn das Stabmittel (R) derart angeordnet ist, dass es im Wesentlichen vertikal verläuft, in dem darunterliegenden Nippelgehäuse (NH) vorhandenes Fluid nicht nach oben strömen kann, sodass jedoch, wenn bewirkt wird, dass sich das Stabmittel (R) so bewegt, dass es nicht im Wesentlichen vertikal verläuft, ein Strömungsweg vorbei an dem verbreiterten unteren Abschnitt des Stabmittels (R) und vorbei am zweiten Dichtmittel geöffnet wird.

7. System nach Anspruch 6, wobei sich die zweite Dichtung an einem oberen Abschnitt davon mit einem Haltemittel (SR) in dem Nippelgehäuse (NH) in Kontakt befindet.

8. System nach einem der Ansprüche 1 bis 4, wobei das Nippelgehäuse (NH) ferner wenigstens eine erste und eine zweite durchmesserreduzierende Begrenzung darin umfasst, wobei die erste davon über der zweiten davon abgeordnet ist, wobei unter jeder aus der ersten und zweiten durchmesserreduzierenden Begrenzung wenigstens ein Dichtmittel vorhanden ist, wobei das Nippelgehäuse (NH) ferner wenigstens eine seitwärts weisende Öffnung dadurch aufweist, welche das Mittel zum Ausstoßen von Fluid bildet und sich an einer Stelle zwischen der Oberseite des Napfes (C) und dem Boden des Napfes (C) befindet;
wobei das Stabmittel (R) im Wesentlichen einen Durchmesser über den Großteil seiner Länge aufweist, jedoch einen im Wesentlichen abrupten größeren Durchmesser nahe seinem unteren Ende aufweist, wobei der Abschnitt mit im Wesentlichen abruptem, größerem Durchmesser eine obere und eine untere Fläche aufweist;
wobei das Stabmittel (R) derart angeordnet ist, dass es im Wesentlichen vertikal nach oben aus dem Nippelgehäuse durch das der ersten Begrenzung zugeordnete Dichtmittel verläuft und sich die obere Fläche des im Wesentlichen abrupten größeren Durchmessers in Kontakt mit dem der zweiten Begrenzung zugeordneten Dichtmittel befindet;
sodass bei Gebrauch Quellfluid in das Nippelgehäuse (NH) eintreten kann, wobei das Fluid mit der unteren Fläche des im Wesentlichen abrupten größeren Durchmessers des unteren Abschnitts des Stabmittels (R) in Kontakt kommt;
und ferner sodass, wenn bewirkt wird, dass das Stabmittel (R) nicht im Wesentlichen vertikal verläuft, und während das der ersten Begrenzung zugeordnete Dichtmittel weiterhin verhindert, dass im Wesentlichen das gesamte Fluid daran vorbeiströmt, bewirkt wird, dass das der zweiten Begrenzung zugeordnete Dichtmittel Fluid aufnimmt und es ihm ermöglicht, im Wesentlichen vertikal dadurch hindurchzutreten und danach aus der wenigstens einen Öffnung ausgestoßen zu werden, wobei das Fluid in einer im Wesentlichen seitlich ausgerichteten Richtung in den Napf (C) ausgestoßen wird, wobei darin keine Elemente zum Beeinflussen des Fluidausstoßes (FOUT) in den Napf (C) in einer Richtung mit einer im Allgemeinen Aufwärts- oder Abwärtskomponente vorhanden sind.

9. System nach Anspruch 6, 7 oder 8, wobei das erste Dichtmittel zwei Dichtungen umfasst und gegebenenfalls wobei es sich bei wenigstens einem der Dichtmittel um einen Dichtring handelt.

10. System nach einem der Ansprüche 1 bis 9, das ferner ein Strömungsbegrenzungsmittel (E1) zum Begrenzen der Bewegung des Stabmittels und damit Begrenzen der Flüssigkeitsströmung umfasst.

11. System nach Anspruch 10, wobei das Strömungsbegrenzungsmittel abnehmbar ist.

12. System nach Anspruch 10 oder Anspruch 11, das ferner ein Strömungsbegrenzungsmittel umfasst, das die Bewegung des Stabmittels gänzlich verhindert.

13. System nach einem vorhergehenden Anspruch, das ferner einen Begrenzungselementrahmen (RE) umfasst, der dazu ausgestaltet ist, den Zugang zum Stabmittel zu begrenzen.

14. System nach einem vorhergehenden Anspruch, das ferner einen Begrenzungselementrahmen (RE) umfasst, der dazu ausgestaltet ist, einem Tier Zugang zum Stabmittel und zu Fluid im Napf von einer Seite des Rahmens aus zu ermöglichen, jedoch nicht zu ermöglichen, dass viele Tiere gleichzeitig Zugang haben.

15. System nach einem vorhergehenden Anspruch, wobei das Mittel zum Ausstoßen von Fluid drei bis sechs seitwärts weisende Öffnungen umfasst, durch die Fluid aus dem Mittel zum Aufnehmen von Fluid geleitet und in den Napf ausgestoßen wird.

## Revendications

1. Système d'aliments pour animaux dans lequel le fluide est amené dans une coupe (C), ladite coupe (C), vue en élévation latérale, présentant une partie supérieure ouverte, des côtés substantiellement saillants verticalement, et un dispositif de réception de fluide projeté à travers le fond de la dite coupe, ledit système comprenant un dispositif d'éjection dudit fluide dans ladite coupe dans une direction substantiellement latérale ; le dispositif de réception du fluide étant incorporé dans un boîtier à tétine (NH) comprenant en outre un dispositif à tige (R) situé dans celui-ci, ledit dispositif à tige étant accessible par le dessus de la coupe, et incorporé fonctionnellement dans ledit dispositif de réception de fluide, de sorte que le mouvement dudit dispositif à tige hors de sa direction verticale nominale entraîne l'introduction, par le dispositif de réception de fluide, du fluide dans ladite coupe par le biais dudit dispositif d'éjection dudit fluide ; **caractérisé en ce qu'**un flotteur (FLT) est présent à l'intérieur du boîtier à tétine (NH), qui sert à limiter automatiquement le mouvement dudit dispositif à tige (R), en permettant ainsi l'écoulement du fluide, lorsque le niveau du fluide éjecté augmente dans ladite coupe (C) et à l'intérieur du boîtier à tétine (NH) ; le flotteur se trouvant dans un espace annulaire situé entre ledit boîtier à tétine et ledit dispositif à tige dans celui-ci, et l'espace annulaire étant plus petit dans un emplacement supérieur que dans une position inférieure.

2. Système selon la revendication 1, le fluide étant éjecté dans la coupe dans une direction non radiale.

3. Système selon la revendication 1 ou la revendication 2, le dispositif de réception de fluide recevant le fluide dans une direction substantiellement verticale.

4. Système selon une quelconque des revendications précédentes, le boîtier à tétine comprenant en outre un dispositif d'entrée/sortie de fluide configuré pour permettre l'entrée du fluide dans l'espace annulaire et sa sortie de celui-ci.

5. Système selon une quelconque des revendications 1 à 4, le dispositif à tige présentant substantiellement un diamètre sur la majeure partie de sa longueur, mais présentant, de façon substantiellement abrupte, un diamètre supérieur dans sa partie inférieure.

6. Système selon une quelconque des revendications 1 à 4, ledit dispositif à tige (R) faisant saillie dudit boîtier à tétine (NH) à travers un premier dispositif d'étanchéité empêchant le passage vertical de substantiellement tout le fluide à travers celui-ci ; une partie inférieure dudit dispositif à tige (R) étant, de façon abrupte, substantiellement élargie, et un deuxième dispositif d'étanchéité étant présent sur le dessus de ladite partie inférieure élargie, de sorte que ledit dispositif à tige (R) soit positionné de façon à être saillant dans une direction substantiellement verticale, le fluide présent dans ledit boîtier à tétine (NH), en-dessous, ne pouvant pas s'écouler vers le haut, mais de sorte que lorsque ledit dispositif à tige (R) est déplacé en faisant saillie autrement que de façon substantiellement verticale, un chemin d'écoulement s'ouvre au-delà de ladite partie inférieure élargie dudit dispositif à tige (R), et au-delà dudit deuxième dispositif d'étanchéité.

7. Système selon la revendication 6, ledit deuxième joint étant au contact, dans une partie supérieure de celui-ci, avec le dispositif de retenue (SR) dans ledit boîtier à tétine (NH).

8. Système selon une quelconque des revendications 1 à 4, ledit boîtier à tétine (NH) comprenant en outre dans celui-ci au moins une première et une deuxième restriction à réduction du diamètre, la première étant positionnée au-dessus de la deuxième, au-dessous de chacune desdites première et une deuxième restriction à réduction du diamètre se trouvant au moins un dispositif d'étanchéité, ledit boîtier à tétine (NH) comprenant en outre, et étant traversé par, au moins un trou à direction latérale constituant le dispositif d'éjection du fluide, et se trouvant dans une position intermédiaire entre la partie supérieure de ladite coupe (C) et le fond de ladite coupe (C) ;
ledit dispositif à tige (R) ayant substantiellement le même diamètre sur la majeure partie de sa longueur, mais ce diamètre augmentant substantiellement, et de façon abrupte, à proximité de son extrémité inférieure, ladite partie au diamètre majoré substantiellement, et de façon abrupte, présentant des surfaces supérieure et inférieure ;
ledit dispositif à tige (R) étant positionné de sorte qu'il fasse saillie de façon substantiellement verticale, vers le haut, hors dudit boîtier à tétine, à travers le dispositif d'étanchéité correspondant à la première restriction, et la surface supérieure dudit diamètre majoré substantiellement, et de façon abrupte, étant au contact dudit dispositif d'étanchéité correspondant à la deuxième restriction ;
de sorte qu'en cours d'usage le fluide source puisse s'introduire dans ledit boîtier à tétine (NH), le fluide entrant en contact avec la surface inférieure du diamètre majoré substantiellement, et de façon abrupte, de la partie inférieure dudit dispositif à tige (R) ;
et, en outre, que lorsque ledit dispositif à tige (R) est amené à faire saillie autrement que de façon substantiellement verticale, ledit dispositif d'étanchéité correspondant à la première restriction continuant d'empêcher l'écoulement de substantiellement tout le fluide au-delà de celui-ci, ledit dispositif d'étanchéité correspondant à la deuxième restriction est amené à recevoir le fluide et permettre son passage de façon substantiellement verticale par celui-ci, pour être ensuite éjecté par ledit au moins un trou, ledit fluide étant éjecté, dans une direction substantiellement latérale, dans ladite coupe (C), aucun élément n'étant présent à l'intérieur pour influer sur l'éjection du fluide (FOUT) dans ladite coupe (C) dans une direction avec un composant d'une manière générale vers le haut ou vers le bas.

9. Système selon la revendication 6, 7 ou 8, le premier dispositif d'étanchéité comprenant deux joints, et, en option, au moins un des dispositifs d'étanchéité étant une garniture d'étanchéité.

10. Système selon une quelconque des revendications 1 à 9, comprenant en outre un dispositif de restriction du débit (E1) pour limiter le mouvement du dispositif à tige, en limitant ainsi le débit de liquide.

11. Système selon la revendication 10, le dispositif de restriction du débit étant amovible.

12. Système selon la revendication 10 ou la revendication 11, comprenant un dispositif de restriction du débit empêchant entièrement le déplacement du dispositif à tige.

13. Système selon une quelconque des revendications précédentes, comprenant en outre un cadre d'élément de restriction (RE), configuré de façon à limiter l'accès au dispositif à tige.

14. Système selon une quelconque des revendications précédentes, comprenant en outre un cadre d'élément de restriction (RE), configuré de façon à permettre à un animal d'accéder au dispositif à tige, et au fluide dans la coupe, par un côté du cadre, sans toutefois permettre à plusieurs animaux d'y accéder simultanément.

15. Système selon une quelconque des revendications précédentes, le dispositif d'éjection du fluide comprenant de trois à six trous à direction latérale par lesquels le fluide est amené depuis le dispositif de réception de fluide, et éjecté dans la coupe.
